# EUROPÄISCHE PATENTSCHRIFT

(11) **EP 4 445 179 B1**
(45) Veröffentlichungstag und Bekanntmachung des Hinweises auf die Patenterteilung: **13.05.2026**
(21) Anmeldenummer: 22818043.6
(22) Anmeldetag: 17.11.2022
(51) Int. Cl.: G01S 15/931, G01S 15/87, G01S 15/42, G01S 13/931, G01S 15/86

(54) **FAHRTRICHTUNGSABHÄNGIGE EINSTELLUNG EINES ERFASSUNGSBEREICHS VON ULTRASCHALLSENSORARRAYS**
DIRECTION OF TRAVEL-DEPENDENT SETTING OF A DETECTION AREA OF ULTRASONIC SENSOR ARRAYS
RÉGLAGE DÉPENDANT DE LA DIRECTION DE DÉPLACEMENT D'UNE ZONE DE DÉTECTION DE RÉSEAUX DE CAPTEURS ULTRASONORES

(30) Priorität: 07.12.2021 DE 102021213905
(43) Veröffentlichungstag der Anmeldung: 16.10.2024
(73) Patentinhaber: Robert Bosch GmbH, 70442 Stuttgart (DE)
(72) Erfinder: SCHUMANN, Michael, 70597 Stuttgart (DE); BOECKER, Matthias, 72760 Reutlingen (DE)
(86) Internationale Anmeldenummer: PCT/EP2022/082237
(87) Internationale Veröffentlichungsnummer: WO 2023/104463

(56) Entgegenhaltungen:
- EP-A1- 1 345 044
- DE-A1- 102005 024 052
- DE-A1- 102010 054 066
- DE-A1- 102011 079 706
- DE-A1- 102014 220 994
- US-A1- 2019 033 439
- US-A1- 2019 277 962

## Beschreibung

Die Erfindung betrifft ein Verfahren zum Anpassen eines Erfassungsbereichs von mindestens einem Ultraschallsensorarrays eines Fahrzeugs, ein Steuergerät, ein Computerprogramm sowie ein maschinenlesbares Speichermedium.

### Stand der Technik

Zum Überwachen der unmittelbaren Fahrzeugumgebung werden üblicherweise Ultraschallsensoren verwendet. Dabei haben die Ultraschallsensoren eine optimale Reichweite von ca. 5 m, wobei jeder Ultraschallsensor als eine einzelne Quelle agiert. Der Abstrahlwinkel der Schallkeule bzw. des Erfassungsbereichs gebräuchlicher Ultraschallsensoren ist grundsätzlich nicht veränderbar. Für die zuverlässige Funktion von ultraschallbasierter Abstandsmessung und Objekterkennung ist eine redundante bzw. überlappende Messung von Hindernissen mit mehreren Ultraschallsensoren erforderlich. Insbesondere bei Kurvenfahrten ist eine derartige Überlappung von Erfassungsbereichen mehrerer Ultraschallsensoren jedoch nicht gegeben.

Die US 5,531,117 A offenbart die Steuerung einer Phasenverschiebung in einem "phased array", um einen resultierenden Ultraschall-Kegel auf einen beliebigen Punkt zu streuen. Hierdurch kann die zu untersuchende Umgebung gescannt werden.

Aus der DE 10 2005 024 052 A1 ist ein Ultraschallsystem bekannt, bei dem eine Ansteuerung des Gesamtblickwinkels auf Grundlage von Daten von anderen Systemen oder Betriebsmodi, beispielsweise in Abhängigkeit vom Lenkwinkel, verwendet werden.

Die US 2019/033439 A1 beschreibt ein System zum Detektieren von Objekten und zum Ermitteln von Entfernungen basierend auf einem Phased-Array. Eine KI steuert das System hinsichtlich der Strahlenformung und des Phasenversatzes der Emitter des Phased-Array, um eine Ablenkung des Erfassungsbereichs umzusetzen. Aus der US 2019/277962 A1 ist eine Anordnung von Radarsensoren beschrieben, die in Form eines Phased-Array-Sensors ausgestaltet sein können. Hierdurch kann die Senderichtung und die Empfangsrichtung basierend auf einem eingestellten Phasenversatz angepasst werden.

In der DE 10 2014 220994 A1 ist ein Fahrassistenzsystem offenbart bei dem zwei Ultraschallsensoren mit jeweils einem starren Erfassungsbereich parallel zueinander angeordnet sind. Die Erfassungsbereiche der Ultraschallsensoren überschneiden sich mittig. Durch eine derartige Anordnung der Ultraschallsensoren und der resultierenden Erfassungsbereiche kann eine Vielzahl von Situationen sensorisch korrekt erfasst werden ohne dass eine Anpassung oder Schwenkung der Erfassungsbereiche erforderlich wäre. Weiterer Stand der Technik ist aus EP 1 345 044 A1, DE 10 2010 054066 A1 und aus DE 10 2011 079706 A1 bekannt.

### Offenbarung der Erfindung

Die der Erfindung zugrunde liegende Aufgabe kann darin gesehen werden, ein Verfahren vorzuschlagen, durch welches eine ultraschallbasierte Messung dynamisch an unterschiedliche Verkehrssituationen anpassbar ist.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Anpassen eines Erfassungsbereichs von mindestens einem Ultraschallsensorarrays eines Fahrzeugs bereitgestellt. Das Verfahren kann vorzugsweise durch ein Steuergerät allein oder in Verbindung mit entsprechenden fahrzeugseitigen Sensoren durchgeführt werden.

In einem Schritt werden Messdaten empfangen und eine Fahrtrichtung durch Auswerten der Messdaten ermittelt. Anschließend werden Steuersignale zum Ansteuern von mindestens zwei Wandlerelementen mindestens eines Ultraschallsensorarrays erzeugt.

Dabei wird durch die Steuersignale ein Phasenversatz zwischen den durch die Wandlerelemente gesendeten Ultraschallwellen und/oder ein Phasenversatz zwischen den durch die Wandlerelemente empfangenen Ultraschallwellen eingestellt, welcher an die Fahrtrichtung des Fahrzeugs angepasst ist.

Vorteilhafterweise werden bei einer Geradeausfahrt des Fahrzeugs ein Erfassungsbereich von mindestens einem ersten Ultraschallsensorarray durch einen positiven Phasenversatz und ein Erfassungsbereich von mindestens einem zweiten Ultraschallsensorarray durch einen negativen Phasenversatz zu einer Symmetrieachse des Fahrzeugs konzentriert oder von der Symmetrieachse des Fahrzeugs weggerichtet. Mit Hilfe dieser Maßnahme können mehrere am Fahrzeug angeordnete Ultraschallsensorarrays derart durch die Steuersignale bzw. Steuerbefehle angesteuert werden, dass ein "Schielen" der entsprechenden Sensoranordnung aus mehreren Ultraschallsensorarrays realisiert wird, bei der die Erfassungsbereiche der Ultraschallsensorarrays zu den Fahrzeugseiten hin gedreht oder abgelenkt werden. Hierdurch wird der resultierende Erfassungsbereich aller Ultraschallsensorarrays vergrößert.

Alternativ wird eine Konzentration oder Fokussierung der Erfassungsbereiche zu der Symmetrieachse des Fahrzeugs erzielt. Somit wird der resultierende Erfassungsbereich aller Ultraschallsensorarrays verkleinert.

Dabei ist die Symmetrieachse des Fahrzeugs als eine in Längsrichtung bzw. in Fahrtrichtung gerichtete Achse, die durch eine Fahrzeugmitte, insbesondere zwischen einem Fahrersitz und einem Beifahrersitz, verläuft.

Darüber hinaus können bei der Positionierung der äußeren seitlichen Ultraschallsensorarrays zwei Betriebsmodi realisiert werden. Insbesondere kann ein Betriebsmodus für ein freies Manövrieren bzw. ein sogenannter PAS Modus und ein Betriebsmodus für eine Parklückensuche umgesetzt werden. Beim Betriebsmodus "freies Manövrieren" wird ein Überlapp von Erfassungsbereichen von möglichst vielen Ultraschallsensorarrays eingestellt. Dabei werden an den Fahrzeugseiten außen angeordnete Ultraschallsensorarrays zur Symmetrieachse hin gedreht, sodass möglichst viele Kreuzechos der Nachbarsensoren empfangen werden können.

Im Gegensatz hierzu kann bei dem Betriebsmodus "Parklückensuche" der Erfassungsbereich von mindestens einem Ultraschallsensorarray senkrecht zur Fahrbewegung eingestellt werden bzw. an die Fahrtrichtung angepasst werden. Durch diese Maßnahme können vordere und hintere Flanken von parklückenbegrenzenden Fahrzeugen gleichermaßen ausleuchtet werden.

Darüber hinaus kann eine Sensitivität im Empfang gezielt in den hohen Winkelbereichen im Falle einer Parklückendetektion durch Beam-Steering gesteigert werden. Als Folge davon erhält man zusätzliche Echosignale, die über Trilateration zur Verbesserung der Lokalisierung und Klassifikation der Fahrzeugecke genutzt werden können.

Empfangsnebenkeulen können in dieser Ausprägung durch die hohen Steering-Winkel des Erfassungsbereichs insbesondere im Frontbereich des Fahrzeugs entstehen, d.h. Ultraschallechos aus diesen Bereichen könnten damit versehentlich als Seitenechos interpretiert werden und die Signalauswertung verfälschen. Relevant sind hier aber nur Echos mit einer Distanz von kleiner als der typischen Vorbeifahrdistanz an den seitlichen Objekten also ca. 2 - 3 m. Bei höheren Fahrgeschwindigkeiten (typischerweise mehr als 10km/h) kommen hier als reale Quelle Bodenechos vor. Daher ist es vorteilhaft, wenn die Empfangscharakteristik zusätzlich zum seitlichen "Schielen" auch vertikal nach oben bzw. vom Untergrund weg gerichtet wird. Dies könnte zum Beispiel durch ein Ultraschallsensorarray mit einer 2x2 Anordnung von Wandlerelementen erreicht werden, bei dem zwei Wandlerelemente entlang einer Querrichtung und zwei Wandlerelemente entlang einer Vertikalrichtung voneinander beabstandet sind.

Durch das Verfahren können fahrzeugseitige Ultraschallsensorarrays ihren Erfassungsbereich derart horizontal und/oder vertikal schwenken, dass der Erfassungsbereich bzw. Field of View abhängig von einem Fahrschlauch des Fahrzeugs ausgerichtet wird. Dabei können Erfassungsbereiche von mehreren Ultraschallsensorarrays auf den voraussichtlichen Fahrschlauch gerichtet sein oder über den Fahrschlauch hinaus geschwenkt werden.

Der Fahrschlauch stellt hierbei einen virtuellen Bereich dar, welcher voraussichtlich von der Fahrzeugkontur bei einer Kurvenfahrt oder einer Geradeausfahrt des Fahrzeugs überschritten bzw. überlagert wird.

Das Verfahren ermöglicht eine intelligente und dynamische Ansteuerung von Ultraschallsensorarrays hinsichtlich des Phasenversatzes der jeweiligen Wandlerelemente. Durch den eingestellten Phasenversatz bei der Erzeugung oder dem Empfang von Ultraschallwellen durch die Wandlerelemente kann eine Richtung des Erfassungsbereichs, welcher zumindest aus einer Hauptkeule besteht, eingestellt oder verändert werden. Somit kann durch die Anpassung des Phasenversatzes der Erfassungsbereich geschwenkt bzw. gedreht werden, um beispielsweise dynamisch der Fahrtrichtung des Fahrzeugs zu folgen. Hierdurch kann die Lokalisierungsgenauigkeit und die Klassifikation bei der Objekterkennung erhöht werden. Insbesondere können die resultierenden Messdaten der Ultraschallsensorarrays allein oder unterstützend für eine Objekterkennung eingesetzt werden.

Durch das Verfahren kann beispielsweise eine Steuerung einer automatischen Bremsung verbessert werden. Insbesondere kann die höhere Anzahl an relevanten Sensoren, die auf einen für die Bremsung relevanten Bereich "fokussierbar" sind, eine bessere Plausibilisierung der einzelnen Ergebnisse ermöglichen und dadurch in einer Verringerung an Fehlinterpretationen resultieren.

Darüber hinaus kann das Verfahren bei der Parkplatzsuche eingesetzt werden, bei der eine gezielte unterschiedliche Ansteuerung der einzelnen Ultraschallsensorarrays eine bessere Charakterisierung einer Parklücke ermöglicht.

Ein Steuergerät kann vorzugsweise mit mindestens zwei Wandlerelementen von mindestens einem Ultraschallsensorarray datenleitend verbunden sein. Insbesondere kann durch das Steuergerät eine individuelle Ansteuerung der Wandlerelemente zum Senden und/oder zum Empfangen von Schallwellen erfolgen. Mit Hilfe des Steuergeräts kann das Verfahren ausgeführt werden.

Das Fahrzeug kann hierbei gemäß der BASt Norm assistiert, teilautomatisiert, hochautomatisiert und/oder vollautomatisiert bzw. fahrerlos betreibbar sein.

Das Ultraschallsensorarray der Sensoranordnung weist mindestens zwei in Vertikalrichtung und/oder in Horizontalrichtung voneinander beabstandete Wandlerelemente auf, wobei die Wandlerelemente und der mindestens eine Ultraschallsensor durch ein mit den Wandlerelementen elektrisch verbundenes Steuergerät angesteuert und/oder ausgelesen werden können.

Die jeweiligen Wandlerelemente sind als Teilsensoren des Ultraschallsensorarrays ausgestaltet und können vom Steuergerät unabhängig voneinander angesteuert und ausgewertet werden. Insbesondere können die erzeugten Schallwellen der Wandlerelemente miteinander interferieren, wodurch die Hauptachse der emittierten Schallechos gekippt bzw. gegenüber der Flächennormalen abgelenkt wird.

Insbesondere kann durch ein phasenversetztes Ansteuern der Wandlerelemente, beispielsweise zwischen vertikal versetzen Elementreihen, die Hauptachse der vertikalen Schallabstrahlung gegenüber der Sensormembranhauptachse gekippt werden.

Vorzugsweise sind die Wandlerelemente, die durch Membranschwingungen und/oder Zylinderschwingungen zum Erzeugen und Empfangen von Schallwellen angeregt werden, auf einer gemeinsamen Ebene angeordnet, anhand welcher die Flächennormale definiert ist.

Das mindestens eine Ultraschallsensorarray kann vorzugsweise in MEMS-Technologie hergestellt und beispielsweise als ein sogenannter piezoelectric micromachined ultrasonic transducer (PMUT-Sensor) ausgestaltet sein. Die Wandlerelemente können als Membranen oder als schwingbare Kolben oder als kombinierte Membran-Kolben-Anordnungen ausgestaltet sein, um Schallimpulse bzw. Schallwellen zu erzeugen und/oder zu empfangen.

Bei einem Ausführungsbeispiel werden die Messdaten zum Ermitteln der Fahrtrichtung von einer als ein Einparkassistenzsystem, ein Lenkwinkelsensor, einem GNSS-Sensor, eine Trajektorienplanung und/oder von einer als ein Navigationssystem ausgestalteten Einheit empfangen. Durch diese Maßnahme kann die Fahrtrichtung und darüber hinaus ein voraussichtlicher Fahrschlauch des Fahrzeugs basierend auf einer Vielzahl von Messdaten bestimmt werden. Dabei können die Daten von einem Kamerasystem eines Einparkassistenten, Daten eines GNSS-basierten Navigationssystems oder Messdaten von unterschiedlichen, fahrzeugseitigen Sensoren verwendet werden.

Nach einer weiteren Ausführungsform wird der Phasenversatz zwischen den durch die Wandlerelemente gesendeten Ultraschallwellen derart eingestellt, dass ein Erfassungsbereich des mindestens einen Ultraschallsensorarrays einen Fahrschlauch des Fahrzeugs überlappt. Hierdurch können mehrere Ultraschallsensorarrays oder nur ein Ultraschallsensorarray von mehreren vorhandenen Ultraschallsensorarrays derart hinsichtlich der Ausrichtung des Erfassungsbereichs durch die Steuersignale eingestellt werden, dass der Fahrschlauch mit Erfassungsbereichen von mehreren Ultraschallsensorarrays überlappt wird.

Alternativ oder zusätzlich kann eine Kombination aus statischen bzw. Bulk Ultraschallsensoren und Ultraschallsensorarrays eingesetzt werden.

Gemäß einem weiteren Ausführungsbeispiel wird ein Fahrschlauch des Fahrzeugs durch den Erfassungsbereich von mindestens einem Ultraschallsensorarray in Fahrtrichtung des Fahrzeugs und/oder ein Fahrschlauch des Fahrzeugs durch den Erfassungsbereich von mindestens einem Ultraschallsensorarray entgegen der Fahrtrichtung des Fahrzeugs überlappt wird. Durch diese Maßnahme können Ultraschallsensorarrays in eine beliebige Richtung im Fahrzeugumfeld hinsichtlich der horizontalen und/oder vertikalen Ausrichtung des Erfassungsbereichs angesteuert werden.

Beispielsweise kann der Erfassungsbereich bei einem Befahren einer Steigung im Frontbereich des Fahrzeugs durch die Ultraschallsensorarrays angehoben bzw. vom Boden weg geschwenkt werden und im Heckbereich des Fahrzeugs zum Untergrund hin gesenkt werden, um eine optimale Erkennung von Hindernissen auch in Bodennähe zu ermöglichen.

Nach einer weiteren Ausführungsform wird durch die erzeugten Steuersignale ein Phasenversatz zwischen den erzeugten Ultraschallwellen von mindestens zwei entlang einer Querrichtung und/oder entlang einer Höhenrichtung zueinander versetzt angeordneten Wandlerelementen eingestellt, wobei die Wandlerelemente einen Abstand in Querrichtung und/oder in Höhenrichtung von mindestens einer halben Wellenlänge der erzeugten Ultraschallwellen zueinander aufweisen. Durch die Anordnung der Wandlerelemente mit einem Abstand von im Wesentlich einer halben Wellenlänge der erzeugten Ultraschallwellen können die Einflüsse von Nebenkeulen auf die erzeugten Ultraschallwellen minimiert werden.

Gemäß einem weiteren Ausführungsbeispiel wird der jeweilige Phasenversatz von Wandlerelementen des jeweiligen Ultraschallsensorarrays der von mindestens zwei Ultraschallsensorarrays durch die erzeugten Steuersignale derart eingestellt, dass die Erfassungsbereiche der mindestens zwei Ultraschallsensorarrays sich im Bereich des Fahrschlauchs des Fahrzeugs überlappen. Hierdurch kann eine Fokussierung von mehreren Erfassungsbereichen auf den voraussichtlichen Fahrschlauch realisiert werden.

Eine derartige Fokussierung der Erfassungsbereiche kann durch ein Drehen oder Schwenken von einem Erfassungsbereich von einem Ultraschallsensorarray oder von mehreren Ultraschallsensorarrays ermöglicht werden.

Der Phasenversatz kann von mindestens einem Ultraschallsensorarray aus einer Menge von mehreren Ultraschallsensorarrays durch die erzeugten Steuersignale eingestellt werden. Die anderen Ultraschallsensorarrays werden hinsichtlich ihres Phasenversatzes nicht verändert. Somit kann der Aufwand zur Steuerung der jeweiligen Ultraschallsensorarrays reduziert werden, da nur ein Teil der verfügbaren Ultraschallsensorarrays durch das Steuergerät angesteuert werden muss. Vorteilhafterweise können anstelle von nicht angesteuerten Ultraschallsensorarrays reguläre Ultraschallsensoren bzw. Bulk-Ultraschallsensoren eingesetzt werden.

Gemäß der beanspruchten Erfindung werden Steuersignale erzeugt, um mindestens zwei Ultraschallsensorarrays mit einem voneinander abweichenden Phasenversatz zu beaufschlagen. Je nach Position der Ultraschallsensorarrays am Fahrzeug können die eingestellten Phasenversätze unterschiedlich groß sein.

Im Folgenden werden anhand von stark vereinfachten schematischen Darstellungen bevorzugte Ausführungsbeispiele der Erfindung näher erläutert. Hierbei zeigen
- Fig. 1-3: schematische Draufsichten auf einen Heckbereich eines Fahrzeugs mit visualisiertem Phasenversatz und einem resultierenden Erfassungsbereich gemäß einer Ausführungsform der Erfindung,
- Fig. 4: schematische Draufsichten auf einen Heckbereich eines Fahrzeugs mit einem angepassten Phasenwinkel bei einer Geradeausfahrt und einer Kurvenfahrt gemäß einer Ausführungsform der Erfindung,
- Fig. 5: eine schematische Draufsicht auf einen Heckbereich eines Fahrzeugs mit von einer Symmetrieachse des Fahrzeugs weggeschwenkten Erfassungsbereichen gemäß einer Ausführungsform der Erfindung und
- Fig. 6: ein schematisches Ablaufdiagramm zum Veranschaulichen eines erfindungsgemäßen Verfahrens gemäß einer Ausführungsform.

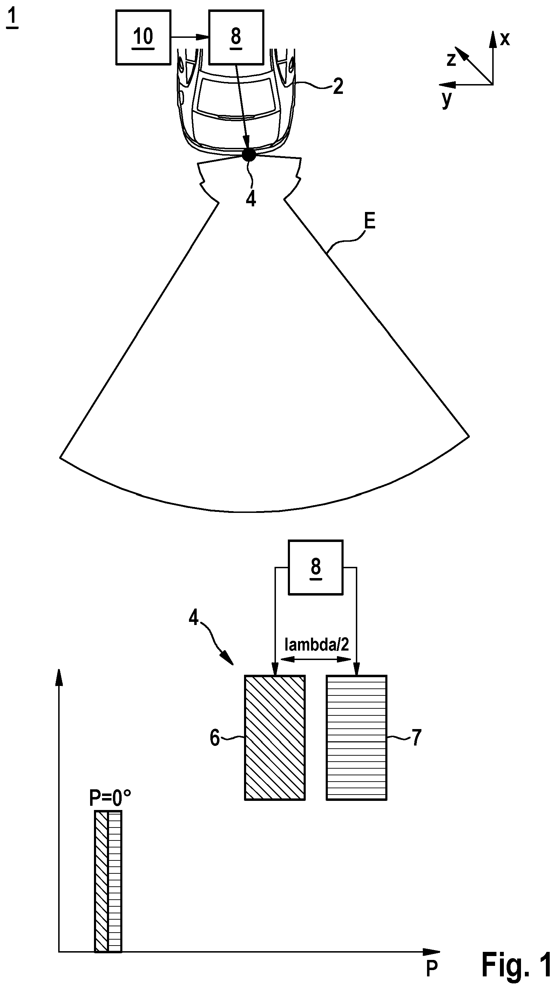

In der Figur 1, der Figur 2 und der Figur 3 sind schematische Draufsichten auf Fahrzeuganordnung 1 dargestellt, die einen Heckbereich eines Fahrzeugs 2 mit visualisiertem Phasenversatz P und einem resultierenden Erfassungsbereich E hinter dem Fahrzeug 2 gemäß Ausführungsformen der Erfindung veranschaulichen. Insbesondere wird beispielhaft das Prinzip des horizontalen Beam Steerings veranschaulicht.

Das Fahrzeug 2 weist beispielhaft ein Ultraschallsensorarray 4 auf. Dabei kann eine beliebige Anzahl von Ultraschallsensorarrays 4 verwendet werden, die symmetrisch oder asymmetrisch entlang einer Kontur des Fahrzeugs 2 angeordnet sein können. Darüber hinaus weist das Fahrzeug 2 ein Steuergerät 8 auf.

Das mindestens eine Ultraschallsensorarray kann analog auch in einem Frontbereich und/oder in mindestens einem Seitenbereich des Fahrzeugs 2 angeordnet sein.

Das Ultraschallsensorarray 4 der Fahrzeuganordnung 1 weist mindestens zwei in Vertikalrichtung z und/oder in Querrichtung y und/oder in Längsrichtung x voneinander beabstandete Wandlerelemente 6, 7 auf, wobei die Wandlerelemente 6, 7 durch ein mit den Wandlerelementen 6, 7 elektrisch verbundenes Steuergerät 8 angesteuert und/oder ausgelesen werden können. Dabei kann das Steuergerät 8 Steuersignale bzw. Steuerbefehle erzeugen, die dazu eingerichtet sind, die Wandlerelemente 6, 7 individuell mit einem Phasenversatz P oder ohne eines Phasenversatzes P zum Senden und/oder Empfangen von Ultraschallwellen zu veranlassen. Die beiden Wandlerelemente 6, 7 weisen einen Abstand entlang der Querrichtung y zueinander auf, welcher einer halben Wellenlänge bzw. lambda/2 der erzeugten Ultraschallwellen entspricht.

Es sind beispielhaft zwei Wandlerelemente 6, 7 im Bereich des Diagramms dargestellt, um den Zusammenhang zwischen der Ansteuerung der Wandlerelemente 6, 7 und einer resultierenden Veränderung des Erfassungsbereichs E zu verdeutlichen.

In Figur 1 ist eine Fahrzeuganordnung 1 dargestellt, bei der durch die erzeugten Steuerbefehle des Steuergeräts 8 kein Phasenversatz P=0° zwischen den erzeugten Ultraschallwellen der Wandlerelemente 6, 7 eingestellt wird. Hierdurch breiten sich die erzeugten Ultraschallwellen senkrecht zur Sensorebene bzw. einer Membranebene der Wandlerelemente 6, 7 entgegen der Fahrtrichtung aus. Im Diagramm sind die entsprechenden Ultraschallimpulse der jeweiligen Wandlerelemente 6, 7 mit korrespondierender Schraffierung gezeigt. Dabei wird im Diagramm anhand der gesendeten Ultraschallimpulse veranschaulicht, dass kein Phasenversatz P eingestellt ist.

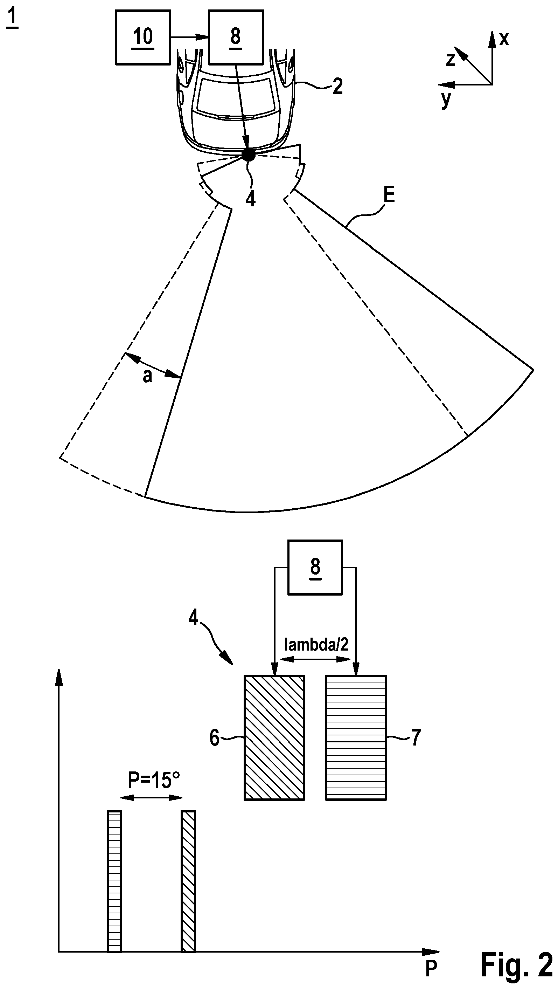

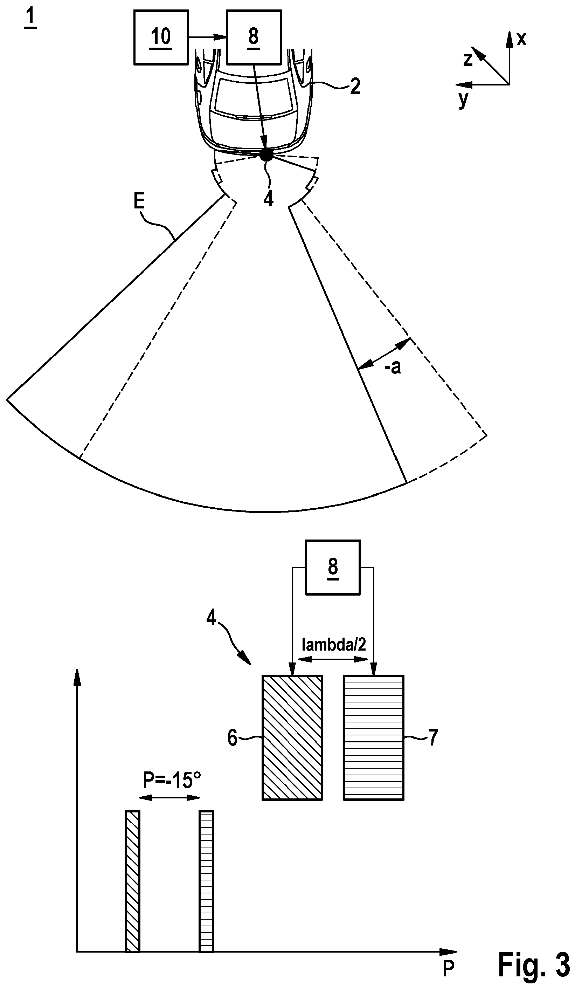

Die Figur 2 zeigt ein Ausführungsbeispiel einer Fahrzeuganordnung 1, bei der das Steuergerät 8 Steuerbefehle erzeugt, die einen Phasenversatz P von +15° einstellen. Dabei wird beispielsweise ein zweites Wandlerelement 7 gegenüber einem ersten Wandlerelement 6 verzögert angesteuert, um den Phasenversatz P zu realisieren. Durch den eingestellten Phasenversatz P resultiert eine Drehung des Erfassungsbereichs E um einen horizontalen Winkel a. Analog hierzu wird in der Figur 3 ein Ausführungsbeispiel veranschaulicht, bei dem ein Phasenversatz P von -15° durch entsprechende Steuerbefehle des Steuergeräts 8 eingestellt wird. Der Erfassungsbereich E des Ultraschallsensorarrays 4 wird somit um einen Winkel -a geschwenkt.

Je nach Fahrtrichtung des Fahrzeugs 2 können Seitenbereiche nicht ausreichend durch übliche Ultraschallsensoren abgedeckt werden, da ihr Erfassungsbereich statisch ist. Hierdurch nimmt die Lokalisierungsgenauigkeit von Objekten ab. Eine besondere Bedeutung dieses Sachverhaltes kommt ins Spiel, wenn das Fahrzeug 2 eine kurvenförmige Bewegung, wie beispielsweise bei einem rückwärtigen Einparke, vollführt. Während bei einem geraden Rückwärtsfahren in der Regel eine Mehrfachabdeckung von Objekten vorliegt, und daher beschrieben eine sehr genaue Detektionsmöglichkeit eines Objektes möglich ist, reduziert sich die Objektlokalisierungsmöglichkeit bei Objekten beim Kurvenfahren erheblich und es liegt entsprechend auch eine geringere Redundanz vor. Neben der Lokalisierungsgenauigkeit ist die Objektklassifikation (typischerweise Zweiklassen: brems- und Warnrelevant oder überfahrbar) ein wesentlicher Aspekt für ein Ultraschallsystem. Durch die fehlende Abdeckung im Randbereich bzw. Seitenbereich ist der für die Klassifikation zu Grunde liegende Objektdatensatz wesentlich kleiner als im Zentralbereich bzw. im Bereich einer Symmetrieachse S, wodurch die Klassifikation deutlich eingeschränkt ist. Eine Folge davon ist eine späte korrekte Klassifikation, was sich als späte Erstdetektionszeit (bei der Zweiklassen Klassifizierung) bezeichnen lässt. Das ist besonders für Szenarien mit seitlich in einen Fahrschlauch F eintretenden Objekten, wie beispielsweise Fußgänger oder Fahrradfahrern, relevant.

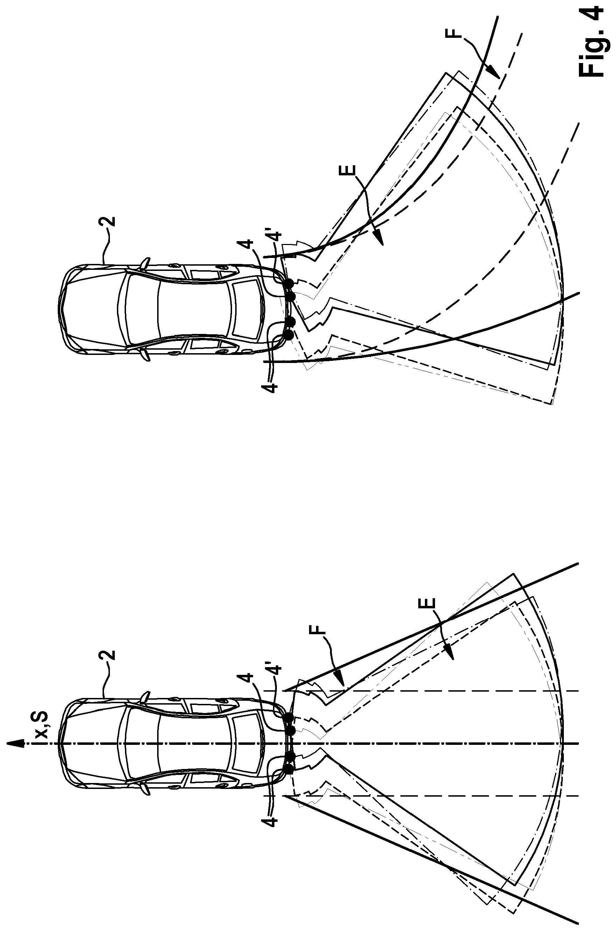

Bei der erfindungsgemäßen Fahrzeuganordnung 1 kann das Steuergerät 8 Messdaten von einer Einheit 10, die beispielsweise als ein Lenkwinkelsensor oder als geplante Trajektoriendaten ausgestaltet sein kann, empfangen, um eine Fahrtrichtung des Fahrzeugs 2 zu bestimmen. Basierend auf der ermittelten Fahrtrichtung werden Steuerbefehle durch das Steuergerät 8 generiert, um die Wandlerelemente 6, 7 mit einem Phasenversatz P anzusteuern. Der Phasenversatz P kann durch das Steuergerät 8 dynamisch in Abhängigkeit von der ermittelten Fahrtrichtung einstellen bzw. variieren. Somit kann eine intelligent Nachführung des Erfassungsbereichs E an einen Fahrschlauch F (s. Figur 4) erfolgen, um die Lokalisierungsgenauigkeit und die Klassifikation bei der Objekterkennung zu erhöhen.

Die Figur 4 zeigt schematische Draufsichten auf einen Heckbereich eines Fahrzeugs 2 mit einem angepassten Phasenwinkel P bei einer Geradeausfahrt (links) und einer Kurvenfahrt (rechts) gemäß einer Ausführungsform der Erfindung und verdeutlicht die intelligente Nachführung des Erfassungsbereichs E an den Fahrschlauch F.

Durch das Steuergerät 8 werden Daten der Fahrsteuerung, beispielsweise von einer als Lenkwinkelsensor ausgestalteten Einheit 10, übernommen und damit ein gezieltes Ansteuern des kalkulierten Fahrweges vollzogen. Hier könnten zum Beispiel dieselben Daten verwendet werden, welche den erwarteten Fahrweg bei aktuell eingeschlagenen Rädern benutzt, um die die Fahrstrecke im Infotainmentsystem anzuzeigen. Nun werden aber diese Daten verwendet, um jedes Wandlerelement 6, 7 der Ultraschallsensorarrays 4 derart anzusteuern, dass der wirklich wichtige Bereich, insbesondere der Fahrschlauch F, hinter dem Fahrzeug 2 besser durch die Erfassungsbereiche abdecket wird.

Beispielsweise können die beiden mittleren Ultraschallsensorarrays 4 ohne unterschiedliche Phasenansteuerung betrieben werden, wohingegen die beiden äußeren Ultraschallsensorarrays 4 jeweils durch die Phasenansteuerung ihrer Hauptsichtkeule nach innen bzw. in Richtung der Symmetrieachse S verlagern. Resultierend ist, dass ab einen gewissen Abstand hinter dem Fahrzeug 2 im relevanten Bereich F fast ausschließlich eine Vierfachabdeckung vorliegt und somit eine bessere Lokalisierungsmöglichkeit sowie Redundanz gegeben ist.

Im Falle einer Kurvenbewegung, wie rechts in der Figur 4 dargestellt, können alle Ultraschallsensorarrays 4 unterschiedlich angesteuert werden, sodass der Fahrweg ideal "ausgeleuchtet" wird.

Falls im generellen Betrieb auch die allgemeine Umgebung neben dem relevanten Bereich bzw. dem Fahrschlauch F untersucht werden soll, kann zwischen Betriebsmodi für ein Abtasten des Erfassungsbereichs E ohne eine Steuerung des Phasenversatzes P und mit einer Steuerung des Phasenversatzes P umgeschaltet werden.

Der Phasenversatz P kann beispielsweise für ein mittig angeordnetes erstes Ultraschallsensorarray 4 gegenüber einem Phasenversatz P von einem seitlich am Fahrzeug 2 angeordneten Ultraschallsensorarray 4' abweichend durch das Steuergerät 8 eingestellt werden. Der Übersicht halber ist das Steuergerät 8 nur in den Figuren 1 bis 3 dargestellt.

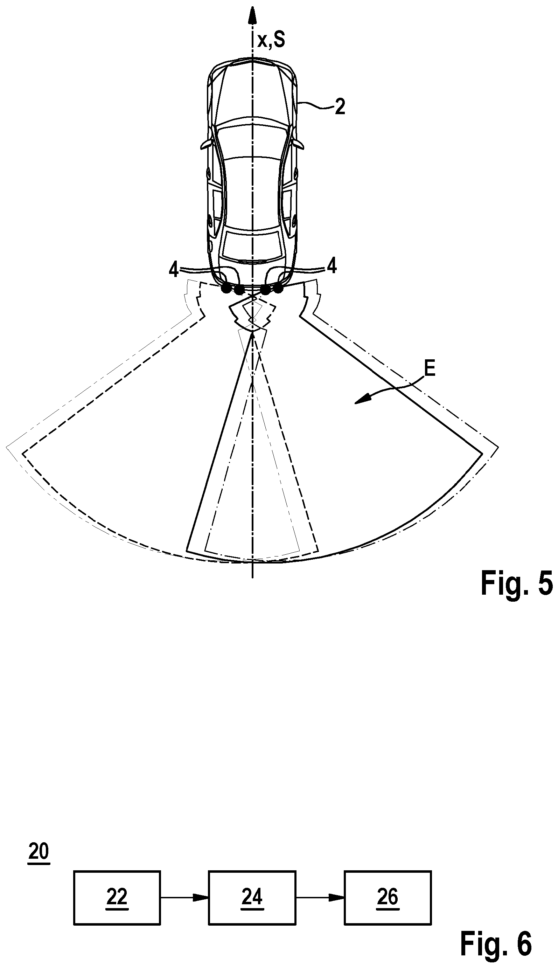

In der Figur 5 ist eine schematische Draufsicht auf einen Heckbereich eines Fahrzeugs 2 mit von einer Symmetrieachse S des Fahrzeugs 2 weggeschwenkten Erfassungsbereichen E gemäß einer Ausführungsform der Erfindung gezeigt. Dabei können mehrere am Fahrzeug 2 angeordnete Ultraschallsensorarrays 4 derart durch die Steuerbefehle des Steuergeräts 8 angesteuert werden, dass ein "Schielen" der mehreren Ultraschallsensorarrays 4 realisiert wird, sodass die Erfassungsbereiche E der Ultraschallsensorarrays 4 zu den Fahrzeugseiten hin gedreht oder abgelenkt werden. Hierdurch wird der resultierende Erfassungsbereich E aller Ultraschallsensorarrays 4 vergrößert.

Alternativ wird eine Konzentration oder Fokussierung der Erfassungsbereiche E zu der Symmetrieachse S des Fahrzeugs 2 erzielt. Somit wird der resultierende Erfassungsbereich E aller Ultraschallsensorarrays 4 verkleinert.

Bevorzugterweise ist die Symmetrieachse S des Fahrzeugs 2 als eine in Längsrichtung x gerichtete Achse, die durch eine Fahrzeugmitte, insbesondere zwischen einem Fahrersitz und einem Beifahrersitz, verläuft.

Die Figur 6 zeigt ein schematisches Ablaufdiagramm zum Veranschaulichen eines erfindungsgemäßen Verfahrens 20 gemäß einer Ausführungsform. Das Verfahren 20 dient zum Anpassen eines Erfassungsbereichs E von mindestens einem Ultraschallsensorarrays 4 eines Fahrzeugs 2 durch ein Steuergerät 8.

In einem Schritt 22 werden Messdaten empfangen. Anhand der empfangenen Messdaten wird eine Fahrtrichtung ermittelt.

In einem weiteren Schritt 24 werden Steuersignale zum Ansteuern von mindestens zwei Wandlerelementen 6, 7 des mindestens einen Ultraschallsensorarrays 4 erzeugt.

Durch die Steuersignale wird ein Phasenversatz P zwischen den durch die Wandlerelemente 6, 7 gesendeten Ultraschallwellen und/oder ein Phasenversatz P zwischen den durch die Wandlerelemente 6, 7 empfangenen Ultraschallwellen eingestellt 26, welcher an die Fahrtrichtung des Fahrzeugs 2 angepasst ist.

## Patentansprüche

1. Verfahren (20) zum Anpassen eines Erfassungsbereichs (E) von mindestens einem Ultraschallsensorarray (4) eines Fahrzeugs (2) durch ein Steuergerät (8), wobei
- Messdaten empfangen und eine Fahrtrichtung ermittelt werden (22),
- Steuersignale zum Ansteuern von mindestens zwei Wandlerelementen (6, 7) des mindestens einen Ultraschallsensorarrays (4) erzeugt werden (24), wobei
durch die Steuersignale ein Phasenversatz (P) zwischen den durch die Wandlerelemente (6, 7) gesendeten Ultraschallwellen und/oder ein Phasenversatz (P) zwischen den durch die Wandlerelemente (6, 7) empfangenen Ultraschallwellen eingestellt (26) wird, welcher an die Fahrtrichtung des Fahrzeugs (2) angepasst ist, **dadurch gekennzeichnet, dass** bei einer Geradeausfahrt des Fahrzeugs (2) ein Erfassungsbereich (E) von mindestens einem ersten Ultraschallsensorarray (4) durch einen positiven Phasenversatz (P) und ein Erfassungsbereich (E) von mindestens einem zweiten Ultraschallsensorarray (4') durch einen negativen Phasenversatz (P) zu einer Symmetrieachse (S) des Fahrzeugs (2) konzentriert oder von der Symmetrieachse (S) des Fahrzeugs (2) weggerichtet werden,
wobei die Symmetrieachse des Fahrzeugs eine in Fahrtrichtung gerichtete Achse ist, die entlang der Längsrichtung des Fahrzeugs durch die Fahrzeugmitte verläuft, insbesondere zwischen einem Fahrersitz und einem Beifahrersitz.

2. Verfahren nach Anspruch 1, wobei die Messdaten zum Ermitteln der Fahrtrichtung von einer als ein Einparkassistenzsystem, ein Lenkwinkelsensor, ein GNSS-Sensor, eine Trajektorienplanung und/oder von einer als ein Navigationssystem ausgestalteten Einheit (10) empfangen werden.

3. 4-Verfahren nach Anspruch 2, wobei ein Fahrschlauch (F) des Fahrzeugs (2) durch den Erfassungsbereich (E) von mindestens einem Ultraschallsensorarray (4) in Fahrtrichtung des Fahrzeugs (2) oder ein Fahrschlauch (F) des Fahrzeugs (2) durch den Erfassungsbereich (E) von mindestens einem Ultraschallsensorarray (4) entgegen der Fahrtrichtung des Fahrzeugs (2) überlappt wird.

4. Verfahren nach einem der Ansprüche 1 bis 3, wobei durch die erzeugten Steuersignale der jeweilige Phasenversatz (P) zwischen den erzeugten Ultraschallwellen von mindestens zwei entlang einer Querrichtung (y) und/oder entlang einer Höhenrichtung (z) zueinander versetzt angeordneten Wandlerelementen (6, 7) des jeweiligen Ultraschallsensorarrays eingestellt wird, wobei die Wandlerelemente (6, 7) einen Abstand in Querrichtung (y) und/oder in Höhenrichtung (z) von mindestens einer halben Wellenlänge (lambda) der erzeugten Ultraschallwellen zueinander aufweisen.

5. Verfahren nach einem der Ansprüche 1 bis 4, wobei der Phasenversatz (P) von Wandlerelementen (6, 7) des jeweiligen Ultraschallsensorarrays der mindestens zwei Ultraschallsensorarrays (4) durch die erzeugten Steuersignale derart eingestellt wird, dass die Erfassungsbereiche (E) der mindestens zwei Ultraschallsensorarrays (4) sich im Bereich des Fahrschlauchs (F) des Fahrzeugs (2) überlappen.

## Claims

1. Method (20) for adjusting a detection area (E) of at least one ultrasonic sensor array (4) of a vehicle (2) by means of a control unit (8), wherein
- measurement data are received and a direction of travel is determined (22),
- control signals for controlling at least two transducer elements (6, 7) of the at least one ultrasonic sensor array (4) are generated (24), wherein
a phase shift (P) between the ultrasonic waves transmitted by the transducer elements (6, 7) and/or a phase shift (P) between the ultrasonic waves received by the transducer elements (6, 7) is/are set (26) by way of the control signals, said phase shift being adapted to the direction of travel of the vehicle (2), **characterized in that**, when the vehicle (2) is travelling in a straight line, a detection area (E) of at least one first ultrasonic sensor array (4) is concentrated by a positive phase shift (P) and a detection area (E) of at least one second ultrasonic sensor array (4') is concentrated by a negative phase shift (P) with respect to an axis of symmetry (S) of the vehicle (2) or directed away from the axis of symmetry (S) of the vehicle (2),
wherein the axis of symmetry of the vehicle is an axis which is directed in the direction of travel and runs along the longitudinal direction of the vehicle through the centre of the vehicle, in particular between a driver's seat and a front passenger's seat.

2. Method according to Claim 1, wherein the measurement data for determining the direction of travel are received from a unit (10) configured as a parking assistance system, a steering angle sensor, a GNSS sensor, a trajectory planning system and/or a navigation system.

3. Method according to Claim 2, wherein a driving path (F) of the vehicle (2) is overlapped by the detection area (E) of at least one ultrasonic sensor array (4) in the direction of travel of the vehicle (2) or a driving path (F) of the vehicle (2) is overlapped by the detection area (E) of at least one ultrasonic sensor array (4) counter to the direction of travel of the vehicle (2).

4. Method according to one of Claims 1 to 3, wherein the respective phase shift (P) between the generated ultrasonic waves of at least two transducer elements (6, 7) of the respective ultrasonic sensor array which are arranged so as to be offset to each other along a transverse direction (y) and/or along a vertical direction (z) is adjusted by way of the generated control signals, wherein the transducer elements (6, 7) are at a distance from each other in the transverse direction (y) and/or in the vertical direction (z) of at least half a wavelength (lambda) of the generated ultrasonic waves.

5. Method according to one of Claims 1 to 4, wherein the phase shift (P) of transducer elements (6, 7) of the respective ultrasonic sensor array of the at least two ultrasonic sensor arrays (4) is adjusted by way of the generated control signals such that the detection areas (E) of the at least two ultrasonic sensor arrays (4) overlap in the area of the driving path (F) of the vehicle (2).

## Revendications

1. Procédé (20) de réglage d'une zone de détection (E) d'au moins un réseau de capteurs ultrasonores (4) d'un véhicule (2) au moyen d'un dispositif de commande (8), dans lequel
- des données de mesure sont reçues et une direction de déplacement est déterminée (22),
- des signaux de commande permettant de commander au moins deux éléments transducteurs (6, 7) de l'au moins un réseau de capteurs ultrasonores (4) sont générés (24), dans lequel,
au moyen des signaux de commande, un déphasage (P) entre les ondes ultrasonores émises par les éléments transducteurs (6, 7) et/ou un déphasage (P) entre les ondes ultrasonores reçues par les éléments transducteurs (6, 7) est réglé (26), lequel déphasage est ajusté sur la direction de déplacement du véhicule (2), **caractérisé en ce que**, lors d'un déplacement en ligne droite du véhicule (2), une zone de détection (E) d'au moins un premier réseau de capteurs ultrasonores (4), au moyen d'un déphasage (P) positif, et une zone de détection (E) d'au moins un deuxième réseau de capteurs ultrasonores (4'), au moyen d'un déphasage (P) négatif, sont concentrées vers un axe de symétrie (S) du véhicule (2) ou sont dirigées à l'opposé de l'axe de symétrie (S) du véhicule (2),
l'axe de symétrie du véhicule étant un axe orienté dans la direction de déplacement, qui s'étend le long de la direction longitudinale du véhicule et passe par le milieu du véhicule, en particulier entre un siège conducteur et un siège passager.

2. Procédé selon la revendication 1, dans lequel les données de mesure permettant de déterminer la direction de déplacement sont reçues en provenance d'une unité (10) configurée sous la forme d'un système d'aide au stationnement, d'un capteur d'angle de braquage, d'un capteur GNSS, d'une planification de trajectoire et/ou en provenance d'une unité configurée sous la forme d'un système de navigation.

3. Procédé selon la revendication 2, dans lequel une zone de détection (E) d'au moins un réseau de capteurs ultrasonores (4) se superpose à un couloir de circulation (F) du véhicule (2) dans la direction de déplacement du véhicule (2) ou une zone de détection (E) d'au moins un réseau de capteurs ultrasonores (4) se superpose à un couloir de circulation (F) du véhicule (2) dans le sens opposé à la direction de déplacement du véhicule (2).

4. Procédé selon l'une des revendications 1 à 3, dans lequel le déphasage (P) respectif entre les ondes ultrasonores générées d'au moins deux éléments transducteurs (6, 7) du réseau de capteurs ultrasonores respectif, disposés de manière décalée l'un par rapport à l'autre le long d'une direction transversale (y) et/ou le long d'une direction de hauteur (z), est réglé au moyen des signaux de commande générés, les éléments transducteurs (6, 7) présentant respectivement une distance les uns des autres, dans la direction transversale (y) et/ou dans la direction de hauteur (z), d'au moins une demi-longueur d'onde (lambda) des ondes ultrasonores générées.

5. Procédé selon l'une des revendications 1 à 4, dans lequel le déphasage (P) d'éléments transducteurs (6, 7) du réseau de capteurs ultrasonores respectif des au moins deux réseaux de capteurs ultrasonores (4) est réglé par les signaux de commande générés de telle sorte que les zones de détection (E) des au moins deux réseaux de capteurs ultrasonores (4) se superposent dans la zone du couloir de circulation (F) du véhicule (2).
